# EUROPÄISCHE PATENTSCHRIFT

(11) **EP 2 172 387 B1**
(45) Veröffentlichungstag und Bekanntmachung des Hinweises auf die Patenterteilung: **02.11.2011**
(21) Anmeldenummer: 09009470.7
(22) Anmeldetag: 22.07.2009
(51) Int. Cl.: B62D 25/04, B62D 25/08, B60R 21/13

(54) **Fahrzeugtragstruktur für ein Kraftfahrzeug**
Bearing structure for a motor vehicle
Structure porteuse pour un véhicule automobile

(30) Priorität: 01.10.2008 DE 102008049985
(43) Veröffentlichungstag der Anmeldung: 07.04.2010
(73) Patentinhaber: Dr. Ing. h.c. F. Porsche AG, 70435 Stuttgart (DE)
(72) Erfinder: Fröschle, Mathias, 73760 Ostfildern (DE)

(56) Entgegenhaltungen:
- EP-A1- 1 547 874
- EP-A2- 1 728 707

## Beschreibung

Bei der Erfindung wird ausgegangen von einer Fahrzeugtragstruktur für ein Kraftfahrzeug, gemäß Oberbegriff des Patentanspruchs 1.

Eine derartige Tragstruktur ist aus der EP 1 728 707 A2 bekannt. Sie umfasst seitliche, sich gegenüberstehende Aufbausäulen, hier die B-Säulen, zwischen denen eine Tragstruktur angeordnet ist. Die Tragstruktur ist mit seitlichen außenliegenden Enden an den Aufbausäulen befestigt. Die Quertragstruktur ist mehrteilig ausgebildet und weist zwei seitliche, benachbart zur jeweiligen Aufbausäule angeordnete Seitenteile auf, die jeweils als ein aus mehreren Blechteilen zusammengesetzter Hohlträger ausgebildet sind. In Draufsicht gesehen, also von oben betrachtet, verlaufen die Seitenteile bogenartig derart, dass sie sich von der Aufbausäule schräg in Richtung eines Fahrzeughecks erstrecken. Zwischen den beiden Seitenteilen ist ein ebenfalls als Hohlträger ausgebildeter Querträger angeordnet, der mit seinen beiden Enden mit den Seitenteilen verbunden ist.

Eine ähnliche Ausgestaltung einer Fahrzeugtragstruktur ist der DE 60 2004 002 660 T2 zu entnehmen. Dabei sind aus mehreren Blechen zusammengesetzte Seitenteile direkt mit der innenliegenden Seitenwand im Bereich der B-Säule verbunden. Zwischen den beiden Seitenteilen erstreckt sich ein Querträger, auf dem umgekehrt U-förmige Überrollbügel aufgesetzt sind. An der Innenseite der B-Säule sind außerdem Verbindungsklammern vorgesehen, die einer Lagerung eines Verdecks dienen sollen.

Es ist Aufgabe der Erfindung, eine Fahrzeugtragstruktur der eingangs genannten Art anzugeben, die sich sowohl für den Einsatz in Fahrzeugen mit einem festen, unbeweglichen Dach als auch für ein Cabriolet eignet.

Gelöst wird diese Aufgabe mit einer Fahrzeugtragstruktur, die die in Anspruch 1 genannten Merkmale aufweist. Dadurch, dass zwischen der Aufbausäule und dem entsprechend zugeordneten Seitenteil ein zusätzliches Verbindungsstück angebracht wird, kann dieses je nach Wunsch lediglich als Distanzstück bei einem Fahrzeug mit festem Dach oder als Verdecklager für ein Fahrzeug mit beweglichem Dach ausgeführt sein. Die Seitenteile können hingegen unverändert verwendet werden. Durch den Einsatz eines zusätzlichen Aufnahmeteils für die Anbindung des Querträgers an den Seitenteilen kann auch dieses je nach Wunsch ausgestaltet sein, indem es entweder für die Verbindung mit einer Überrollbügelanordnung oder einem Querträger dienen soll, wie er aus der eingangs zitierten EP 1 728 707 A2 bekannt ist. Durch die Verwendung des erfindungsgemäßen Verbindungsstücks zwischen jeder Aufbausäule und dem zugeordneten Seitenteil wird es in besonders vorteilhafter Weise möglich, nicht nur Teile der Querträgerstruktur für verschiedene Fahrzeugtypen zu verwenden, vielmehr kann auch die Aufbausäule für beide Fahrzeugtypen identisch ausgebildet sein. Mithin bietet die erfindungsgemäße Lösung nicht nur Vorteile für die Querträgerstruktur selbst, sondern auch für die Fahrzeugtragstruktur, insbesondere die Aufbausäulen, da diese für zwei unterschiedliche Fahrzeugtypen (geschlossenes Fahrzeug oder Cabriolet) identisch ausgebildet werden können, zumindest in dem Bereich, der der Anbindung der Quertragstruktur dient.

In einem Ausführungsbeispiel gemäß Anspruch 2 ist das Verbindungsstück als Verdecklager ausgebildet, wodurch die erfindungsgemäße Fahrzeugtragstruktur für ein Cabriolet eingesetzt werden kann.

Bei einer besonders bevorzugten Ausführungsform nach Anspruch 3 ist vorgesehen, dass das Aufnahmeteil einen in Richtung der Fahrzeughochachse nach oben ragenden Fortsatz aufweist, an dem der Querträger mit Höhenabstand zu den Seitenteilen gehalten ist. Damit kann der Querträger am Fahrzeug relativ hoch angebracht werden, was insbesondere dann vorteilhaft ist, wenn der Querträger mit Überrollbügeln ausgestattet werden soll, wie dies nach Anspruch 4 vorgesehen ist. Damit überragt die Quertragstruktur mit den Überrollbügeln insbesondere die Gürtellinie des Cabriolets in besonderem Maße, so dass die Überrollbügel einen besonders guten Schutz bei einem Fahrzeugüberschlag entwickeln können, wenn sie zusammen mit dem Windschutzscheibenrahmen des Kraftfahrzeugs einen relativ hohen Schutzraum für die Fahrzeuginsassen bieten. Alternativ kann ein im Querschnitt verstärkter bzw. vergrößerter Querträger an den Aufnahmeteilen mit Fortsatz befestigt werden. Dies gilt insbesondere für die Verwendung mit Überrollbügeln.

Die Höhe der Überrollbügelanordnung lässt sich weiter steigern, wenn - gemäß Anspruch 5 - der Querträger den Abstand zwischen den Seitenteilen bogenartig überspannt.

Nach einer Weiterbildung der Erfindung ist gemäß Anspruch 6 vorgesehen, dass das Aufnahmeteil außer seiner Verbindung mit dem jeweiligen Seitenteil zusätzlich mit einem unter dem Aufnahmeteil liegenden Rohbauelement, beispielsweise Fahrzeugboden oder Motorraumabdeckung, verbunden ist. Dadurch wird die Quertragstruktur weiter deutlich versteift.

Darüber hinaus kann in einem bevorzugten Ausführungsbeispiel vorgesehen sein, dass das Aufnahmeteil nicht nur für die Aufnahme des Querträgers verwendet wird, sondern zusätzlich - wie Anspruch 7 beschreibt - ein Fuß des Überrollbügels daran befestigt, insbesondere darin aufgenommen ist.

Soll die Quertragstruktur für einen geschlossenen Personenkraftwagen verwendet werden, wird das Aufnahmeteil vorzugsweise ohne den Fortsatz ausgebildet, wodurch das Aufnahmeteil etwa auf Höhe des zweiten Teils endet und der Querträger lediglich eine Ladegutsicherung trägt, die in den Fahrzeuginnenraum ragt, wie dies für eine Quertragstruktur ohne Aufnahmeteil allerdings aus der eingangs erwähnten EP 1 728 707 A2 bekannt ist.

Ein bevorzugtes Ausführungsbeispiel zeichnet sich ferner dadurch aus, dass an dem Seitenteil eine Gurtumlenkung für den Sicherheitsgurt befestigt ist. Da die Quertragstruktur steif und besonders fest ausgebildet ist, eignet sie sich in besonders vorteilhafter Weise für die Befestigung der so genannten Gurtumlenkung.

Die Erfindung wird nachfolgend anhand von zwei Ausführungsbeispielen mit Bezug auf die Zeichnung näher erläutert. Es zeigen jeweils in einer perspektivischen Seitenansicht:
- Fig. 1: eine Fahrzeugtragstruktur mit einer Quertragstruktur für ein Cabriolet und
- Fig. 2: eine Fahrzeugtragstruktur mit einer Quertragstruktur für einen geschlossenen Personenkraftwagen.

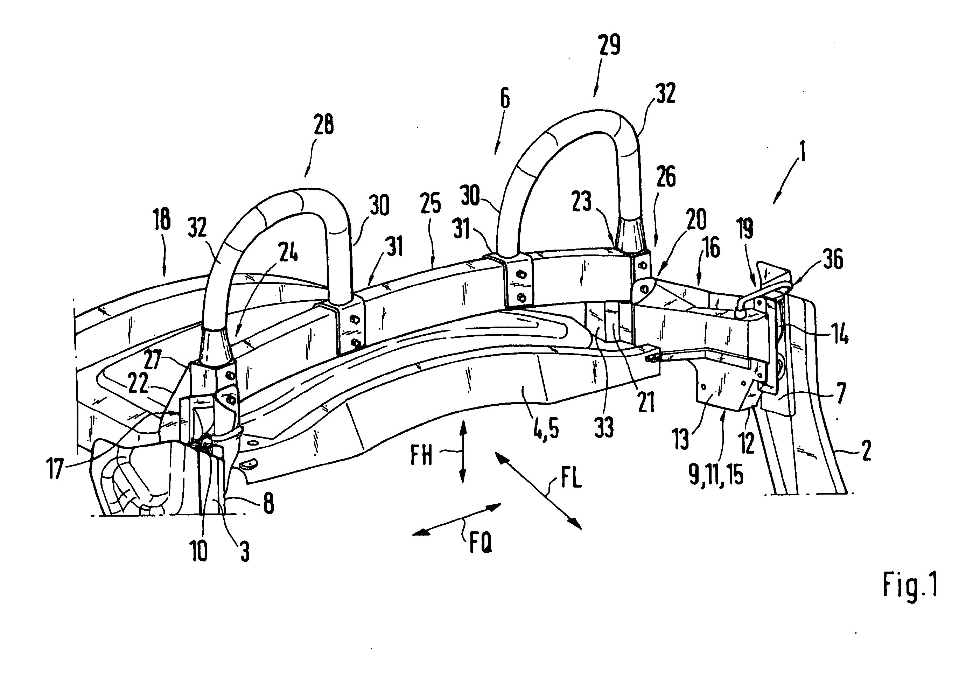

Fig. 1 zeigt ausschnittweise eine Fahrzeugtragstruktur 1, von der seitliche, sich mit einem in Fahrzeugquerrichtung FQ gemessenen Abstand gegenüberstehende Aufbausäulen 2, 3, hier B-Säulen, eines beispielsweise zweisitzigen Kraftfahrzeugs, und ein weiteres Rohbauelement 4 zu sehen sind. Vorzugsweise handelt es sich bei dem Kraftfahrzeug, welches eine derartige Fahrzeugtragstruktur 1 aufweist, um ein zweisitziges Cabriolet mit einer Antriebsmaschine in so genannter Mittelmotoranordnung. Entsprechend ist im Ausführungsbeispiel das Rohbauelement 4 ein Deckel 5 eines nicht näher dargestellten Motorraums für die erwähnte Antriebsmaschine.

Zwischen den beiden Aufbausäulen 2, 3 erstreckt sich eine in Fahrzeugquerrichtung FQ orientierte Quertragstruktur 6, die mit jeweiligen Innenseiten 7, 8 der Aufbausäule 2, 3 verbunden ist. Die Quertragstruktur 6 weist seitlich außenliegende Verbindungsstücke 9, 10 auf, die mit der jeweiligen Innenseite 7, 8 der Aufbausäulen 2, 3 verbunden sind. Die beiden Verbindungsstücke 9, 10 sind im Wesentlichen identisch, jedoch spiegelsymmetrisch ausgebildet, so dass jedes für eine Fahrzeugseite passt. Im Folgenden wird daher lediglich das Verbindungsstück 9 näher erläutert. Es ist in Fahrzeugquerrichtung FQ gesehen als Hohlträger 11 oder kastenartig ausgebildet, und es weist demgemäß eine in Fahrzeugquerrichtung FQ sich erstreckende Wand 12 auf, die eine innere Platte 13 mit einer äußeren Platte 14 des Verbindungsstücks 9 verbindet. Eine zweite in Fahrzeugquerrichtung FQ verlaufende Wand, die sich mit Abstand hinter (in Fahrzeuglängsrichtung FL gesehen) der Wand 12 erstreckt, ist in der Fig. 1 nicht zu sehen. Die Verbindung des Verbindungsstücks 9 mit der Innenseite 7 der Aufbausäule 2 erfolgt wahlweise durch eine lösbare oder unlösbare Verbindung, je nach dem ob das Verbindungsstück 9 als Rohbauteil oder als Montageteil vorgesehen ist, wobei letzteres nachträglich an der Fahrzeugtragstruktur 1 befestigt werden würde. Im Ausführungsbeispiel nach Fig. 1 ist das Verbindungsstück 9 als Verdecklager 15 realisiert, bei dem nicht gezeigte Gestängeteile zwischen den beiden Platten 13 und 14 beweglich gelagert sind, damit eine mit den Gestängeteilen verbundene Dachanordnung (nicht dargestellt) zwischen einer Schließstellung und einer heckseitigen Ablagestellung, hier auf den Deckel 5, bewegt werden kann. Das Verbindungsstück 9 kann jedoch auch ein separates, hier nicht dargestelltes Verdecklager tragen, das beispielsweise zwischen den beiden Platten 13, 14 eingesetzt sein könnte.

An die inneren Platten 13 der beiden Verbindungsstücke 9, 10 schließt sich jeweils ein Seitenteil 16, 17 der Quertragstruktur 6 an und ist mit dem jeweiligen Verbindungsstück 9, 10 lösbar oder unlösbar verbunden, je nach dem, ob das Seitenteil als Rohbauteil oder als Montageteil vorgesehen ist. Ausgehend von der Innenseite 7 bzw. von der inneren Platte 13 erstreckt sich das Seitenteil 16 schräg nach hinten in Richtung eines Fahrzeughecks 18. Das andere Seitenteil 17 ist im Wesentlichen identisch zu dem Seitenteil 16, jedoch spiegelsymmetrisch ausgeführt. Wie insbesondere bei dem Seitenteil 17 zu erkennen ist, erstreckt es sich ebenfalls schräg nach hinten in Richtung zum Fahrzeugheck 18. In Draufsicht gesehen, können die beiden Seitenteile 16, 17 bogenförmig ausgeführt sein. Die als Hohlträger ausgebildeten Seitenteile 16, 17 können aus mehreren Blechteilen zusammengesetzt oder auch als Leichtmetall-Gussteil hergestellt sein, was im Übrigen auch für die Verbindungsstücke 9 und 10 gelten kann, wobei die Verbindungsstücke 9, 10 alternativ als Strangpressprofil realisiert sein könnten.

Jedes Seitenteil 16, 17 besitzt ein erstes Ende 19, welches zwar der Innenseite 7 bzw. 8 der jeweiligen Aufbausäule 2 bzw. 3 zugeordnet, jedoch an dem Verbindungsstück 9, 10 befestigt ist. An seinem anderen Ende 20, das dem Fahrzeugheck 18 zugewandt liegt, ist ein Aufnahmeteil 21 bzw. 22 befestigt, welches außenliegende Enden 23, 24 eines Querträgers 25 aufnimmt. Aufnahmeteil 21 bzw. 22 und entsprechendes Seitenteil 16, 17 sind lösbar oder unlösbar miteinander verbunden, je nach dem, ob das Aufnahmeteil 21, 22 als Rohbauteil oder als Montageteil ausgebildet sein soll.

Wie Fig. 1 verdeutlicht, besitzt das Aufnahmeteil 21, 22 einen in Fahrzeughochrichtung FH orientierten Fortsatz 26, 27, der das jeweilige Seitenteil 16, 17 überragt. Damit kann ein verstärkter bzw. im Querschnitt vergrößerter Querträger 25 aufgenommen oder aber - in Fahrzeughochrichtung FH gesehen - höher montiert werden, so dass auf den Querträger 25 aufgesetzte umgekehrte U-förmige Überrollbügel 28, 29 die Fahrzeugtragstruktur 1 entsprechend höher überragen.

Jeder Überrollbügel 28, 29 weist einen inneren Schenkel 30 auf, der mit einem Fuß 31, der umgekehrt U-förmig ausgeführt sein kann, auf dem Querträger 25 diesen umgreifend befestigt ist. Mit seinem äußeren Schenkel 32 ist der Überrollbügel 28, 29 mit dem Aufnahmeteil 21 bzw. 22 verbunden, insbesondere in das Aufnahmeteil 21, 22 eingesteckt. In einer Draufsicht gesehen ist somit das Aufnahmeteil 21, 22 U-förmig ausgebildet, und öffnet sich einerseits nach oben zur Aufnahme des jeweiligen äußeren Schenkels 32 und andererseits nach innen zur Aufnahme der Enden 23 bzw. 24 des Querträgers 25. Jedes Aufnahmeteil 21, 22 weist darüber hinaus einen Abstützfuß 33 auf, der unterhalb des jeweiligen Fortsatzes 26, 27 liegt und sich auf dem darunter liegenden Rohbauelement 4 abstützt und insbesondere damit lösbar oder unlösbar verbunden ist, je nach dem - wie bereits erwähnt- ob das Aufnahmeteil 21, 22 als Rohbauteil oder als Montageteil ausgebildet ist. Entsprechend kann jedes Aufnahmeteil 21, 22 als einteiliges, insbesondere aus einem Leichtmetall bestehendes Guss-, als mehrteiliges Blechteil oder als Strangpressprofil ausgebildet sein.

Der Querträger 25 überspannt das Rohbauelement 4 bogenartig und ist im Wesentlichen als mit geschlossenem Querschnittsprofil als Hohlträger ausgebildet, der als Leichtmetallgussteil aus mehreren Blechteilen zusammengesetzt oder als einteiliges Strangpressprofil realisiert sein kann. Eine Ausführung als Gussteil wäre für den Querträger ebenfalls denkbar. Jedes Teil der Quertragstruktur 6 ist somit als separates Teil ausgebildet, was insbesondere für die Verbindungsstücke 9, 10 und die Aufnahmeteile 21, 22 gilt. Die mehrteilige Quertragstruktur 6 bildet im gezeigten Ausführungsbeispiel nach Fig. 1 neben einer Querversteifung zwischen den beiden Aufbausäulen 2, 3 noch eine Überrollbügelstruktur für das Cabriolet aus.

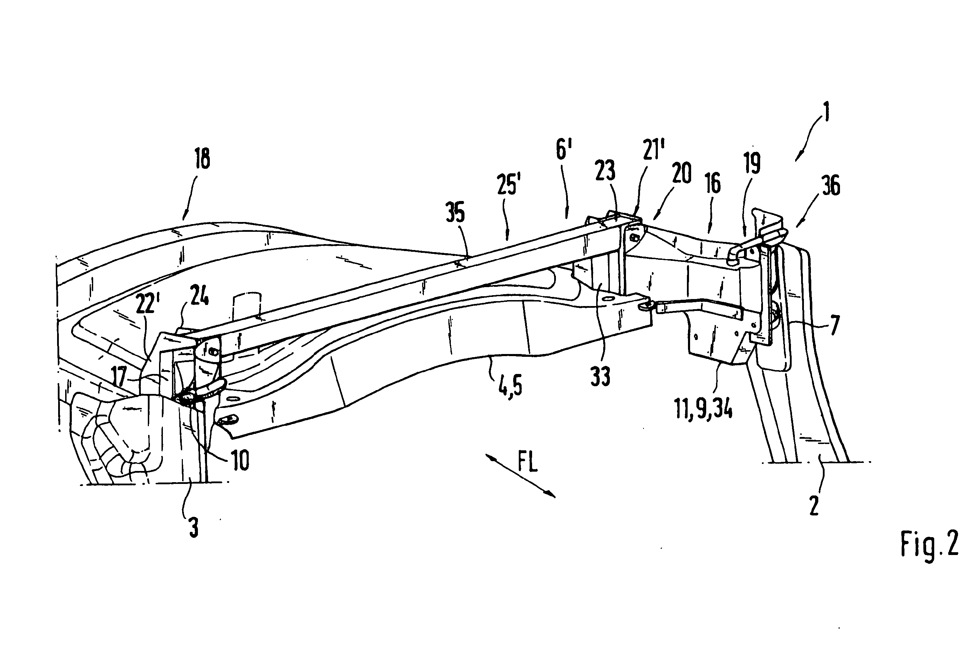

Fig. 2 zeigt nun in einem abgewandelten Ausführungsbeispiel zwar eine identische Fahrzeugtragstruktur 1, jedoch eine abgeänderte Quertragstruktur 6', die im Folgenden näher erläutert wird. Gleiche bzw. gleichwirkende Teile sind in dem Ausführungsbeispiel nach Fig. 2 mit gleichen Bezugszeichen wie in Fig. 1 versehen. Insofern wird auf deren Beschreibung verwiesen. Nachfolgend wird somit lediglich auf Unterschiede bei der Quertragstruktur 6' gegenüber der Quertragstruktur 6 aus Fig. 1 eingegangen. Die Verbindungsstücke 9, 10 können lediglich als Distanzstücke 34 ausgebildet sein, die den Abstand zwischen dem ersten Ende 19 des Seitenteils 16 und der Innenseite 7 der Aufbausäule 2 überbrücken. Die Verbindungsstücke 9, 10 könnten jedoch auch - wie vorstehend beschrieben - als Verdecklager ausgeführt sein, obwohl dies für das Ausführungsbeispiel gemäß Fig. 2 nicht zwingend notwendig ist, da die dort gezeigte Quertragstruktur 6' für ein Fahrzeug mit einem festen, unbeweglichen Dach, also für einen geschlossenen Personenkraftwagen vorgesehen ist. Das Distanzstück 34 besitzt vorzugsweise jedoch die innere und äußere Platte 13, 14 sowie die beiden in Fahrzeugquerrichtung FQ verlaufenden Wände, von denen in Fig. 1 lediglich die Wand 12 dargestellt ist. Die Seitenteile 16, 17 der Quertragstruktur 6' sind identisch ausgebildet wie die Seitenteile 16, 17 der Quertragstruktur 6. Die Aufnahmeteile 21', 22' der Quertragstruktur 6' sind im Bereich des Abstützfußes 33 identisch wie die Aufnahmeteile 21, 22 ausgebildet. Sie weisen den nach oben gerichteten Fortsatz 26 jedoch nicht auf, enden also - in Richtung Fahrzeughochachse FH gesehen - mit den Seitenteilen 16 auf gleichem Niveau. Ein Querträger 25' der Quertragstruktur 6' ist im Wesentlichen gerade ausgebildet und weist gegenüber dem Querträger 25 nach Fig. 1 eine geringere Höhe auf, gemessen in Richtung der Fahrzeughochachse FH. Jedoch ist auch der Querträger 25' mit seinen Enden 23, 24 in dem Aufnahmeteil 21' bzw. 22' gehalten. Für die Verbindung der Aufnahmeteile mit dem entsprechenden Querträger 25 oder 25' kann eine lösbare oder unlösbare Verbindung vorgesehen sein, je nach dem, ob der als Hohlprofil ausgebildete Querträger als Rohbauteil oder als Montageteil vorgesehen ist.

Es wäre denkbar, den in Fig. 2 gezeigten Querträger 25' ebenfalls mit den Überrollbügeln 28, 29 auszustatten, auch wenn die in Fig. 2 gezeigten Aufnahmeteile 21' und 22' für die Quertragstruktur 6' vorgesehen sind. Die Überrollbügel 28, 29 könnten entsprechend höher ausgebildet sein, um den fehlenden Fortsatz 26 auszugleichen. Besonders bevorzugt wird jedoch der in Fig. 2 dargestellte Querträger 25' mit einer hier nicht gezeigten Ladegutsicherung an seiner Oberseite 35 versehen, die jedoch aus der EP 1 728 707 A2 aus der dortigen Fig. 1 (Bezugszeichen 51) bekannt ist. Die gegenüber dem Querträger 25 tiefere Anordnung des Querträgers 25' ist insofern vorteilhaft, als dass ein Blick nach hinten bei einem geschlossenen Personenkraftwagen kaum behindert wird.

Im Übrigen zeigen beide Fig. 1 und 2 noch eine so genannte Gurtumlenkung 36, die benachbart zu jeder Aufbausäule 2, 3 an den Seitenteilen 16, 17 befestigt ist. Die Gurtumlenkung 36 kann als gebogener Bügel ausgeführt sein, um den herum der hier nicht dargestellte Sicherheitsgurt geführt wird.

Dadurch, dass die Enden 23, 24 der Querträger 25, 25' in den Aufnahmeteilen 21, 22, 21', 22' aufgenommen sind, kann eine bessere Krafteinleitung in die Fahrzeugtragstruktur 1 bei einem Seitenaufprall bzw. bei einem Fahrzeugüberschlag erfolgen. Die Verbindung der Quertragstruktur 6, 6' mit der Fahrzeugtragstruktur 1 erfolgt insbesondere bei einer lösbaren Verbindung, wie beispielsweise Schraubverbindung, in Richtung der Fahrzeugquerrichtung FQ. Die lösbare Verbindung zwischen Querträger 25, 25' und den Aufnahmeteilen 21, 22, 21', 22' erfolgt insbesondere bei einer lösbaren Verbindung, wie beispielsweise Schraubverbindung, in Richtung einer Fahrzeuglängsachse FL.

Dadurch, dass einzelne separate Teile für die Quertragstruktur 6 bzw. 6' vorgesehen sind, kann außerdem ein Toleranzausgleich an Verbindungsstellen zwischen Querträger 6, 6' und den Aufnahmeteilen 21, 22 bzw. 21', 22' oder zwischen dem entsprechenden Aufnahmeteil und Seitenteil 16, 17 ermöglicht werden. Bei einer außerhalb des Fahrzeugs vormontierten Quertragstruktur 6, 6' können einzelne Bauteil der Quertragstruktur 6, 6' zunächst lose mit den benachbarten Teilen verschraubt und erst nach dem Einsetzen in die Kraftfahrzeugtragstruktur 1 fest verschraubt werden. Es wäre jedoch alternativ denkbar, einzelne Bauteile der Quertragstruktur 6, 6' nacheinander in der Fahrzeugtragstruktur 1 zu montieren. Auch eine Mischbauweise, d.h. einige Teile sind Rohbauteile und demnach der Tragstruktur 1 zugeordnet und andere Teile sind Montageteile, wäre möglich. Die einzelnen Bauteile der Quertragstruktur 6, 6' sind die beiden seitlichen Verbindungsstücke 9, 10, die Seitenteile 16, 17, die Aufnahmeteile 21, 22 bzw. 21', 22' und der Querträger 25 bzw. 25'.

Es wäre denkbar, bei dem Ausführungsbeispiel nach Fig. 1 an dem Verdecklager 15 bereits das bewegbare Verdeck anzubringen und somit Verdeck und Quertragstruktur 6 als vorgefertigte Baueinheit zwischen den Aufbausäulen 2, 3 zu montieren. Es wäre jedoch alternativ möglich, zuerst das Verdeck über die Verdecklager 15 an der Fahrzeugtragstruktur 1 zu befestigen und anschließend die übrigen Teile 16, 17, 21, 22 und 25 mit der Fahrzeugtragstruktur 1 zu verbinden.

## Patentansprüche

1. Fahrzeugtragstruktur (1) für ein Kraftfahrzeug, mit zwei seitlichen, sich gegenüberstehenden Aufbausäulen (2, 3), mit einer Quertragstruktur (6, 6'), die sich zwischen den Aufbausäulen (2, 3) erstreckt und damit verbunden ist und die folgende Strukturteile aufweist:
- seitliche, benachbart zur jeweiligen Aufbausäule (2, 3) angeordnete und als Hohlträger (11) ausgebildete Seitenteile (16, 17), die sich - in Draufsicht gesehen - schräg von der Aufbausäule (2, 3) in Richtung eines Fahrzeughecks (18) erstrecken und
- einen als Hohlträger ausgebildeten Querträger (6, 6'), der zwischen den Seitenteilen (16, 17) angeordnet ist,
**dadurch gekennzeichnet, dass** zwischen jeder Aufbausäule (2, 3) und jedem zugeordneten Seitenteil (16, 17) ein als separates Teil ausgebildetes Verbindungsstück (9, 10) zwischen Seitenteil (16, 17) und Aufbausäule (2, 3) eingesetzt ist, und dass jedes Seitenteil (16, 17) an seinem der Aufbausäule abgewandten Ende (20) ein als separates Teil ausgebildetes Aufnahmeteil (21, 22, 21', 22') aufweist, an denen der Querträger (6, 6') befestigt ist.

2. Fahrzeugtragstruktur nach Anspruch 1, **dadurch gekennzeichnet, dass** das Verbindungsstück (9, 10) als Verdecklager (15) ausgebildet ist.

3. Fahrzeugtragstruktur nach Anspruch 1 oder 2, **dadurch gekennzeichnet, dass** das Aufnahmeteil (21, 22, 21', 22') einen in Richtung der Fahrzeughochachse (FH) nach oben ragenden Fortsatz (26) aufweist.

4. Fahrzeugtragstruktur nach einem der vorhergehenden Ansprüche, **dadurch gekennzeichnet, dass** an dem Querträger (25) wenigstens ein Überrollbügel (28, 29) befestigt ist.

5. Fahrzeugtragstruktur nach einem der vorhergehenden Ansprüche, **dadurch gekennzeichnet, dass** der Querträger (25) den Abstand zwischen den Seitenteilen (16, 17) bogenartig überspannt.

6. Fahrzeugtragstruktur nach einem der vorhergehenden Ansprüche, **dadurch gekennzeichnet, dass** das Aufnahmeteil (21, 22, 21', 22') außer seiner Verbindung mit dem Seitenteil (16, 17) zusätzlich mit einem unter dem Aufnahmeteil liegenden Rohbauelement (4, 5) verbunden ist.

7. Fahrzeugtragstruktur nach Anspruch 4, **dadurch gekennzeichnet, dass** der zumindest eine Überrollbügel (28, 29) mit einem benachbart zum Aufnahmeteil (21, 22) angesetzten Fuß (31) mit dem Aufnahmeteil (21, 22) verbunden, insbesondere darin aufgenommen ist.

8. Fahrzeugtragstruktur nach Anspruch 1 oder 2, **dadurch gekennzeichnet, dass** das Aufnahmeteil (21', 22') etwa auf Höhe des Seitenteils (16, 17) endet und der Querträger (25') eine Ladegutsicherung trägt, die in den Fahrzeuginnenraum ragt.

9. Fahrzeugtragstruktur nach einem der vorhergehenden Ansprüche, **dadurch gekennzeichnet, dass** an jedem Seitenteil (16, 17) eine Gurtumlenkung (36) befestigt ist.

## Claims

1. Vehicle supporting structure (1) for a motor vehicle, with two lateral, opposite body pillars (2, 3), and with a transverse supporting structure (6, 6') which extends between the body pillars (2, 3) and is connected thereto and which has the following structural parts:
- lateral side parts (16, 17) which are adjacent to the respective body pillar (2, 3), are designed as hollow supports (11) and - as seen in top view - extend obliquely from the body pillar (2, 3) in the direction of a vehicle rear (18), and
- a transverse support (6, 6') which is designed as a hollow support and is arranged between the side parts (16, 17),
**characterized in that** a connecting component (9, 10), which is designed as a separate part, between the side part (16, 17) and body pillar (2, 3) is inserted between each body pillar (2, 3) and each associated side part (16, 17), and **in that** that end (20) of each side part (16, 17) which faces away from the body pillar has a receiving part (21, 22, 21', 22') which is designed as a separate part and to which the transverse support (6, 6') is fastened.

2. Vehicle supporting structure according to Claim 1, **characterized in that** the connecting component (9, 10) is designed as a convertible top bearing (15).

3. Vehicle supporting structure according to Claim 1 or 2, **characterized in that** the receiving part (21, 22, 21', 22') has an extension (26) projecting upward in the direction of the vehicle vertical axis (FH) .

4. Vehicle supporting structure according to one of the preceding claims, **characterized in that** at least one roll bar (28, 29) is fastened to the transverse support (25).

5. Vehicle supporting structure according to one of the preceding claims, **characterized in that** the transverse support (25) spans the distance between the side parts (16, 17) in an arcuate manner.

6. Vehicle supporting structure according to one of the preceding claims, **characterized in that**, apart from its connection to the side part (16, 17), the receiving part (21, 22, 21', 22') is additionally connected to a body shell element (4, 5) located under the receiving part.

7. Vehicle supporting structure according to Claim 4, **characterized in that** the at least one roll bar (28, 29) is connected to the receiving part (21, 22), in particular is accommodated therein, by means of a foot (31) provided adjacent to the receiving part (21, 22).

8. Vehicle supporting structure according to Claim 1 or 2, **characterized in that** the receiving part (21', 22') ends approximately level with the side part (16, 17), and the transverse support (25') bears a luggage-securing means which projects into the vehicle interior.

9. Vehicle supporting structure according to one of the preceding claims, **characterized in that** a belt-deflecting means (36) is fastened to each side part (16, 17).

## Revendications

1. Structure porteuse (1) de véhicule pour un véhicule automobile, comprenant deux montants de carrosserie (2, 3) latéraux en regard l'un de l'autre, une structure porteuse transversale (6, 6') qui s'étend entre les montants de carrosserie (2, 3), qui est reliée à ces derniers et qui comporte les pièces structurelles suivantes :
- des pièces latérales (16, 17) réalisées sous la forme de supports creux (11) et disposées de manière adjacente au montant de carrosserie (2, 3) respectif, lesquelles pièces latérales, considérées en vue de dessus, s'étendent obliquement à partir des montants de carrosserie (2, 3) en direction d'une partie arrière (18) du véhicule et
- une traverse (6, 6') réalisée sous la forme d'un support creux, laquelle traverse est disposée entre les pièces latérales (16, 17),
**caractérisée en ce qu'**entre chaque montant de carrosserie (2, 3) et chaque pièce latérale (16, 17) associée, une pièce de liaison (9, 10) réalisée sous la forme d'une pièce séparée est insérée entre la pièce latérale (16, 17) et le montant de carrosserie (2, 3), et **en ce que** chaque pièce latérale (16, 17), au niveau de son extrémité (20) opposée au montant de carrosserie, comporte une pièce de réception (21, 22, 21', 22') réalisée sous la forme d'une pièce séparée, sur laquelle pièce de réception est fixée la traverse (6, 6').

2. Structure porteuse de véhicule selon la revendication 1, **caractérisée en ce que** la pièce de liaison (9, 10) est réalisée sous la forme d'un support de capote (15).

3. Structure porteuse de véhicule selon la revendication 1 ou 2, **caractérisée en ce que** la pièce de réception (21, 22, 21', 22') comporte un prolongement (26) qui s'étend vers le haut dans la direction de l'axe vertical (FH) du véhicule.

4. Structure porteuse de véhicule selon l'une quelconque des revendications précédentes, **caractérisée en ce qu'**au moins un arceau de sécurité (28, 29) est fixé sur la traverse (25).

5. Structure porteuse de véhicule selon l'une quelconque des revendications précédentes, **caractérisée en ce que** la traverse (25) recouvre la distance entre les pièces latérales (16, 17) à la manière d'un arc.

6. Structure porteuse de véhicule selon l'une quelconque des revendications précédentes, **caractérisée en ce que** la pièce de réception (21, 22, 21', 22'), outre sa liaison à la pièce latérale (16, 17), est de plus reliée à un élément de carrosserie brute (4, 5) situé sous la pièce de réception.

7. Structure porteuse de véhicule selon la revendication 4, **caractérisée en ce que** ledit au moins un arceau de sécurité (28, 29) est relié à la pièce de réception (21, 22) au moyen d'un pied (31) installé de manière adjacente à la pièce de réception (21, 22), et est en particulier reçu dans cette dernière.

8. Structure porteuse de véhicule selon la revendication 1 ou 2, **caractérisée en ce que** la pièce de réception (21', 22') se termine environ au niveau de la pièce latérale (16, 17) et la traverse (25') porte un moyen de fixation de chargement qui fait saillie dans l'habitacle du véhicule.

9. Structure porteuse de véhicule selon l'une quelconque des revendications précédentes, **caractérisée en ce qu'**un renvoi de ceinture (36) est fixé à chaque pièce latérale (16, 17).
